# EUROPEAN PATENT APPLICATION

(11) **EP 1 341 287 A2**
(43) Date of publication of application: **03.09.2003**
(21) Application number: 03003274.2
(22) Date of filing: 24.02.2003
(51) Int. Cl.: H02K 3/24

(54) **Rotor for rotating electric machine**

(30) Priority: 27.02.2002 JP 2002050621
(71) Applicant: Hitachi, Ltd., Chiyoda-ku, Tokyo (JP)
(72) Inventor: Komura, Akiyoshi, Hitachi-shi, Ibaraki 317-0077 (JP); Ide, Kazumasa, Hitachiohta-shi, Ibaraki 313-0049 (JP); Watanabe, Takashi, Hitachi-shi, Ibaraki 316-0032 (JP); Hattori, Kenichi, Hitachi-shi, Ibaraki 319-1225 (JP); Tsunoda, Tomoya, Shirakawa-gun, Fukushima 961-0305 (JP); Odajima, Shinya, Hitachi-shi, Ibaraki 319-1221 (JP); Aoyama, Hiroshi, Tsuchiura-shi, Ibaraki 300-0011 (JP)
(74) Representative: Beetz & Partner Patentanwälte

(57) **Abstract**

A rotor for a rotating electric machine comprises a rotor core (1), and a plurality of rotor conductors (3) wound on the rotor core. At least one of the rotor conductors is provided with a cooling groove (10), and edges of at least one of the cooling grooves are rounded by a radius process to reduce peak stresses that may be induced around the edges of the cooling groove.

## Description

The present invention relates to a rotor for a rotating electric machine, and a rotating electric machine.

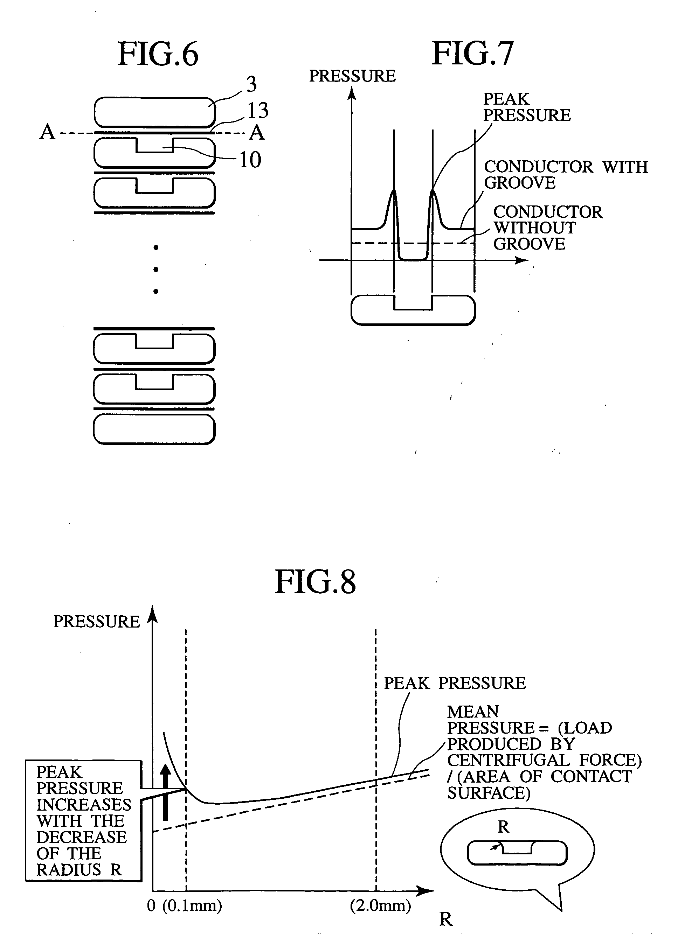

Fig. 6 is a fragmentary sectional view of rotor conductors 3 stacked in an end part of a rotor for a rotating electric machine. Turn insulations 13 are held between the adjacent turns of the stacked rotor conductors 3 to isolate the turns of the stacked rotor conductors 3 electrically from each other. Techniques relating to turn insulation are disclosed in Japanese Patent Laid-open No. 5-300683.

When a cooling groove 10 is formed in a rotor conductor 3 to improve the cooling characteristic of the rotor conductor 3, a mean pressure that acts on the rotor conductor 3 is greater than a mean pressure that acts on the rotor conductor 3 before the cooling groove 10 is formed therein, and peak pressure are induced around the edges of the cooling groove 10 as typically represented by a stress distribution curve shown in Fig. 7. In a large-capacity rotating electric machine, in particular, centrifugal force that acts on the rotor conductors increases with the increase of the size of the rotating electric machine or with the increase of energy density. Then the turn insulation 13 is damaged due to the peak pressure induced around the edges of the cooling groove 10, which deteriorates reliability.

### Summary of the Invention

It is an object of the present invention to improve the cooling characteristic of the rotor conductors of a rotating electric machine without deteriorating the reliability of the rotating electric machine.

It is necessary to reduce the peak pressure induced around the edges of the cooling grooves 10 to avoid damaging the turn insulations 13.

Rounding or chamfering the edges of the cooling groove 10 is an effective means for achieving the object. Although the greater the radius of the rounded edges or the chamfer of the chambered edges, the greater the effect of rounding or chamfering on reducing the peak pressure, the great radius or chamfer increases the mean pressure. Fig. 8 shows the variation of the peak pressure and the mean pressure with the radius of a rounded edge. As shown in Fig. 8, the difference between the mean bearing pressure, i.e., (Load produced by centrifugal force)/(Area of contact surface), indicated by a dotted line and the peak pressure indicated by a continuous line is large when the radius R of rounded edge is below 0.1 mm, and the value of the mean pressure increases with the increase of the radius R beyond 2.0 mm. Although Fig. 8 shows the effect of rounding on the pressure, the effect of chamfering on the pressure is the similar to that of rounding. Therefore, a desirable radius R for rounding or a desirable chamfer C for chamfering is in the range of 0.1 to 2.0 mm. In view of facility of radius and chamfer process, a desirable radius R for rounding or a desirable chamfer C for chamfering is in the range of 0.1 to 0.3 mm.

It is effective to form the cooling groove 10 in a trapezoidal cross section. The deformation of the open end of the cooling groove 10 is effective in reducing the peak pressure.

It is effective to form a shallow back groove in a surface, facing the cooling groove 10, of a conductor. The deformation of the shallow back groove formed in the surface facing the cooling groove 10 is effective in reducing the peak pressure.

### Brief Description of the Drawings

Other objects and advantages of the invention will become apparent from the following description of embodiments with reference to the accompanying drawings in which:
Fig. 1 is a sectional view of rotor conductors included in a rotor for a rotating electric machine in a first embodiment according to the present invention;
Fig. 2 is a sectional view of rotor conductors included in a rotor for a rotating electric machine in a second embodiment according to the present invention;
Fig. 3 is a sectional view of rotor conductors included in a rotor for a rotating electric machine in a third embodiment according to the present invention;
Fig. 4 is a longitudinal sectional view of a rotor for a rotating electric machine;
Fig. 5 is an enlarged, fragmentary perspective view of an end part of a rotor for a rotating electric machine;
Fig. 6 is a sectional view of rotor conductors included in a conventional rotor for a rotating electric machine;
Fig. 7 is a diagram showing a pressure distribution in a plane A-A in Fig. 6;
Fig. 8 is a graph showing the dependence of peak pressure and mean pressure on the radius R of rounded edges of a cooling groove.

### Detailed Description of the Preferred Embodiments

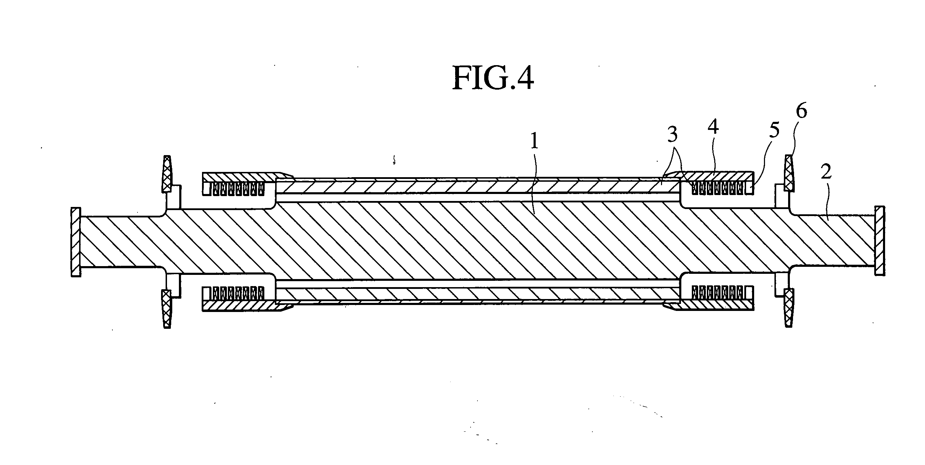

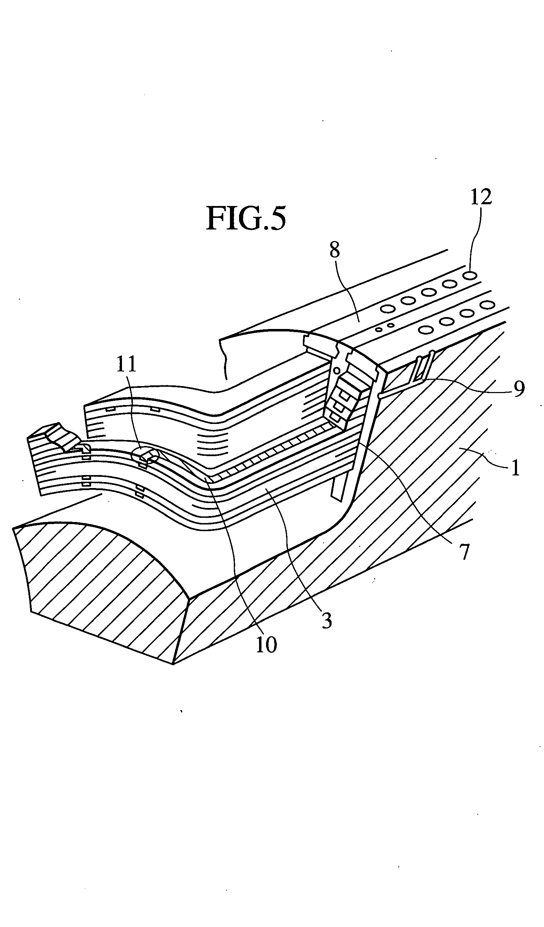

Fig. 4 is a schematic longitudinal sectional view of a rotor for a rotating electric machine. The rotor has a rotor core 1, and a rotor shaft 2 coaxial with the rotor core 1 and longitudinally projecting from the opposite ends of the rotor core 1. The rotor shaft 2 of the rotor is supported stably for rotation in bearings. As shown in Fig. 5, a body part of the rotor core 1 is provided with slots 7. A plurality of rotor conductors 3 are stacked in each slot 7. A field current flows through the rotor conductors 3. Cylindrical retaining rings 4 are mounted on opposite end parts of the rotor core 1 and are pressed against the opposite ends of the rotor conductors 3, respectively, to hold the opposite ends of the rotor conductors 3 in place against centrifugal force that acts on the opposite ends of the rotor conductors 3. Centering rings 5 are fitted in the retaining rings 4, respectively. Fans 6 for pressurizing a cooling medium are mounted on the opposite end parts of the rotor shaft 2, respectively.

Fig. 5 shows an end part of a slotted rotor in an enlarged, fragmentary perspective view, in which the retaining ring 4 and the centering ring 5 are removed to facilitate understanding the construction of the end part of the rotor. The plurality of rotor conductors 3 are stacked in each slot 7, and a wedge 8 is placed on the radially outermost rotor conductor 3 in the slot 7 to hold the rotor conductors 3 in the slot 7 against centrifugal force that acts on the rotor conductors 3.

Usually, in the end parts of rotor there is no passage that leads the cooling medium to the outer surface of the rotor because the retaining rings 4 for holding the radially outermost rotor conductor in place against the centrifugal force, and the center rings 5 are mounted on the opposite end parts of the rotor. Therefore, the end parts of the rotor are cooled mainly by natural convection heat transfer called thermosiphon cooling that has low cooling ability and, consequently, there is a tendency that temperature of conductors at the end parts become higher than those at which middle parts of the rotor. This problem is significant in a large-capacity rotating electric machine. In some cases, cooling ability is improved by forming cooling grooves 10 in the rotor conductors 3 as shown in Fig. 5 to form ventilation passages in the conductors. The cooling medium pressurized by the fans 6 flows through inlets of the cooling grooves 11 into the cooling grooves 10 and cools the rotor conductors 3 as the cooling medium flows through the cooling grooves 10. The cooling medium thus forced into the cooling grooves 10 flows radially outward through radial ducts 12 formed in the conductors, i.e., radial passages, to the outer surface of the rotor. Since the cooling medium flowing through the cooling grooves 10 is driven mainly by the pressure difference produced by centrifugal force generated when the rotor rotates, the cooling medium flows through the cooling grooves 10, i.e., passages, at a high flow velocity. Thus, the cooling ability of the cooling medium is very high as compared with the cooling ability of the cooling medium when the same flows only along the side surfaces of the conductors without the cooling grooves.

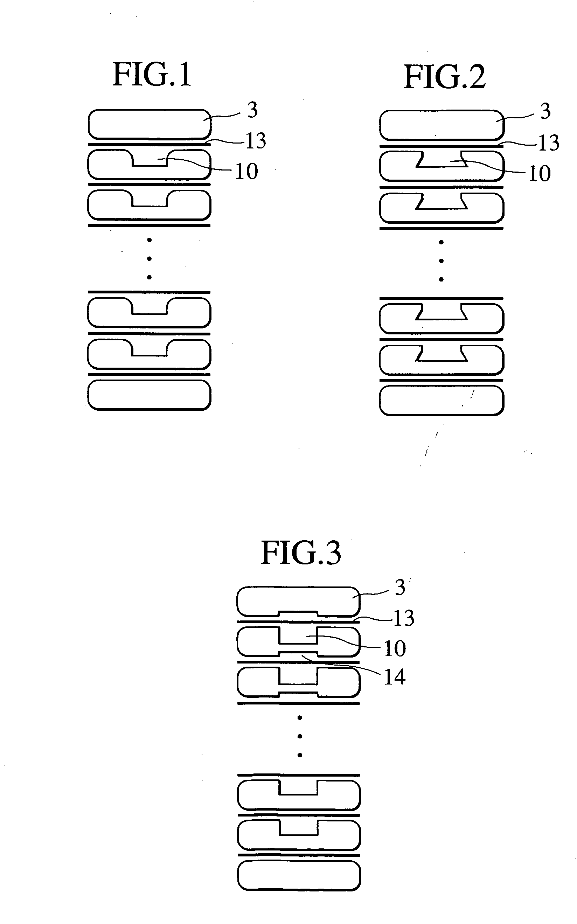

Fig. 1 is a sectional view of rotor conductors included in a rotor for a rotating electric machine in a first embodiment according to the present invention. As shown in Fig. 1, at least one of the stacked rotor conductors 3 is provided with a cooling groove 10, and edges of at least one of the cooling grooves 10 are rounded by a radius process. Although the greater the radius R of the rounded edges, the greater the effect of rounding on reducing peak pressure, the great radius R increases mean pressure. Therefore, a desirable radius R for rounding is in the range of 0.1 to 2.0 mm. The edges of the cooling groove 10 may be chamfered instead of being rounded.

Fig. 2 is a sectional view of rotor conductors included in a rotor for a rotating electric machine in a second embodiment according to the present invention. As shown in Fig. 2, at least one of the stacked rotor conductors 3 is provided with a cooling groove 10, and at least one of the cooling grooves 10 has a trapezoidal cross section expanding toward the bottom. Parts of the rotor conductor around the upper open end of the cooling groove 10 are easily deformable by using such a shape and hence peak pressure induced around the edges of the cooling groove 10 can be reduced. The effect of the rotor conductor 3 in the second embodiment is enhanced when the rotor conductor 3 in the second embodiment is used in combination with the rotor conductor in the first embodiment provided with the cooling groove having rounded or chamfered edges.

Fig. 3 is a sectional view of rotor conductors included in a rotor for a rotating electric machine in a third embodiment according to the present invention. As shown in Fig. 3, at least one of the stacked rotor conductors 3 is provided with a cooling groove 10, and at least one of the rotor conductors 3 is provided with a shallow back groove 14 in its surface facing at least one of the cooling grooves 10. When the shallow back groove 14 is formed in the surface, facing the cooling grove 10, of the rotor conductor 3, the edges of the cooling groove 10 and the shallow back groove 14 are easily deformable and hence peak pressure induced around the edges of the cooling groove 10 can be reduced. The effect of the rotor conductor 3 in the third embodiment is enhanced when the rotor conductor 3 in the third embodiment is used in combination with the rotor conductor in the first embodiment provided with the cooling groove having rounded or chamfered edges.

As apparent from the foregoing description, because the turn insulation isn't damage for the peak pressure around the edge of cooling grooves the cooling grooves can be formed in the rotor conductors of rotors particularly for large-capacity rotating electric machines to improve the cooling characteristic of the rotor conductors at the end part of the rotating electric machines and to suppress the rise of the temperature of the rotor conductors. Consequently, the efficiency of the rotating electric machines can be improved, the costs of the rotating electric machine can be reduced, and the rotating electric machine can be formed in small dimensions.

Thus, the present invention provides the rotor for a rotating electric machine, having an improved cooling characteristic without deteriorating the reliability of the rotating electric machine.

The present invention provides also the rotating electric machine provided with the rotor having an improved cooling characteristic without deteriorating the reliability of the rotating electric machine.

While the invention has been described in its preferred embodiments, it is to be understood that the words which have been used are words of description rather than limitation and that changes within the purview of the appended claims may be made without departing from the true scope and spirit of the invention in its broader aspects.

## Claims

1. A rotor for a rotating electric machine, said rotor comprising:
a rotor core (1); and
a plurality of rotor conductors (3) wound on the rotor core; wherein at least one of the rotor conductors is provided with a cooling groove (10), and edges of at least one of the cooling grooves are rounded by a radius process.

2. The rotor of claim 1, wherein edges of at least one of the cooling grooves are rounded by a radius process in a radius R in the range of 0.1 to 2.0 mm.

3. A rotor for a rotating electric machine, said rotor comprising:
a rotor core (1); and
a plurality of rotor conductors (3) wound on the rotor core; wherein at least one of the rotor conductors is provided with a cooling groove (10), and edges of at least one of the cooling grooves are chamfered by a chamfering process.

4. the rotor of claim 1, wherein edges of at least one of the cooling grooves are chamfered by a chamfering process in a chamfer C in the range of 0.1 to 2.0 mm.

5. A rotor for a rotating electric machine, said rotor comprising:
a rotor core (1); and
a plurality of rotor conductors (3) wound on the rotor core; wherein at least one of the rotor conductors is provided with a cooling groove (10), and at least one of the cooling grooves has an open end of a width smaller than the width of its bottom.

6. A rotor for a rotating electric machine, said rotor comprising:
a rotor core (1); and
a plurality of rotor conductors (3) wound on the rotor core; wherein at least one of the rotor conductors is provided with a cooling groove (10), and a rotor conductor facing at least one of the cooling grooves is provided with a groove.

7. The rotor of claim 1, wherein edges of at least one of the cooling grooves are rounded by a radius process in a radius R in the range of 0.1 to 0.3 mm.

8. The rotor of claim 3, wherein edges of at least one of the cooling grooves are chamfered by a chamfering process in a chamfer C in the range of 0.1 to 0.3 mm.

9. A rotating electric machine provided with the rotor according to one of the claims 1 to 8.
